# EUROPÄISCHE PATENTSCHRIFT

(11) **EP 2 412 579 B1**
(45) Veröffentlichungstag und Bekanntmachung des Hinweises auf die Patenterteilung: **26.02.2014**
(21) Anmeldenummer: 11006066.2
(22) Anmeldetag: 25.07.2011
(51) Int. Cl.: B60R 13/00, G01K 3/04

(54) **Fahrzeuginnenausstattungsteil mit einem Indikationsmittel**
Vehicle interior section with an indicator
Pièce d'équipement de l'espace intérieur d'un véhicule dotée d'un moyen d'indication

(30) Priorität: 26.07.2010 DE 102010032277
(43) Veröffentlichungstag der Anmeldung: 01.02.2012
(73) Patentinhaber: Johnson Controls GmbH, 51399 Burscheid (DE)
(72) Erfinder: Zynda, Martin, 51399 Burscheid (DE); Pellenz, Wolfgang, 53340 Meckenheim (DE); Ndagijimana, Robin, 41469 Neuss (DE)
(74) Vertreter: Wolff, Felix

(56) Entgegenhaltungen:
- EP-A1- 0 413 578
- EP-A2- 0 092 034
- WO-A1-92/08113
- WO-A1-99/36901
- DE-A1- 1 473 295

## Beschreibung

Die vorliegende Erfindung betrifft ein Fahrzeuginnenausstattungsteil mit einem Indikationsmittel. Des Weiteren betrifft die vorliegende Erfindung ein Verfahren zur Herstellung eines Fahrzeuginnenausstattungsteils.

Fahrzeuginnenausstattungsteile werden heutzutage oftmals sicherheitsrelevanten Herstellungsschritten ausgesetzt. Beispielsweise muss bei Klebeprozessen das Fahrzeuginnenausstattungsteil für einen bestimmten Zeitraum einer gewissen Temperatur ausgesetzt werden. Erfolgt dies nicht, weist die Klebestelle keine ausreichende Festigkeit auf. Insbesondere bei Crash-relevanten Bauteilen, wie z. B. einer Fahrzeugsitzlehne, die sich in Leichtbauweise aus mehreren Strukturteilen zusammensetzt, ist somit die Überwachung der Temperatur und der Zeit im Aushärteprozess unabdingbar.

Es war deshalb die Aufgabe der vorliegenden Erfindung ein Fahrzeuginnenausstattungsteil zur Verfügung zu stellen, bei dem sichergestellt ist, dass es insbesondere die sicherheitsrelevanten Eigenschaften aufweist.

Die WO 92/08113 A1 offenbart einen Indikationsmittel, das Informationen über Temperaturbedingungen speichert und/oder anzeigt und der Indikator 1 mehrere Folien umfasst, die derart konfiguriert sind, dass die Anzeige unzureichender Temperaturbedingungen durch eine farbliche Veränderung des Indikators erfolgt.

Gelöst wird die Aufgabe mit einem Fahrzeuginnenausstattungsteil, gemäß Anspruch 1 sowie mit einer Verfahren gemäß Anspruch 5.

Die vorliegende Erfindung betrifft ein Fahrzeuginnenausstattungsteil, beispielsweise ein Verkleidungsteil, ein Armaturenbrettteil und/oder ein Strukturteil eines Fahrzeugsitzes oder einer Fahrzeugbank. Dieses Teil kann aus einem oder mehreren metallischen Werkstoff(en), einem oder mehreren Kunststoffwerkstoff(en), einem oder mehreren Naturwerkstoff(en) oder einer Kombination aus diesen Werkstoffen bestehen. Insbesondere handelt es sich um ein Hybrid-light-weight-Bauteil, bei dem Stahl mit einem leichteren Werkstoff wie beispielsweise Kunststoff oder Aluminium kombiniert wird. Das Fahrzeuginnenausstattungsteil ist vorzugsweise aus mehreren Teilen zusammengesetzt, die insbesondere stoffschlüssig, ganz besonders bevorzugt durch Kleben, miteinander verbunden sind.

Erfindungsgemäß weist dieses Fahrzeuginnenausstattungsteil nun einen Indikator auf, mit dem beispielsweise feststellbar ist, ob das erfindungsgemäße Fahrzeuginnenausstattungsteil einem Behandlungsprozess hinreichend lang und/oder mit einer hinreichenden Intensität unterworfen worden ist. Insbesondere kann mit dem Indikator nachgewiesen werden, ob das Ausstattungsteil einer gewissen Minimaltemperatur über einen gewissen Minimalzeitraum ausgesetzt war. Der Indikator zeigt diese Information an und/oder speichert sie über einen längeren Zeitraum. Beispielsweise handelt es sich bei dem Indikator um einen sogenannten "Temperature Time Indikator" (TTI). Es kann sich aber auch um jeden anderen Indikator handeln, bei dem sich nach einer Behandlung, der das entsprechende Fahrzeuginnenausstattungsteil ausgesetzt werden soll, mindestens ein Parameter, beispielsweise die Farbe, verändert. Diese Veränderung ist vorzugsweise irreversibel. Vorzugsweise handelt es sich bei dem Indikator um eine Folie, insbesondere eine selbstklebende Folie, die eine oder mehrere Schichten aufweisen kann.

Der Indikator wird an dem jeweils zu behandelnden Fahrzeuginnenausstattungsteil vorgesehen, beispielsweise angeklebt und durchläuft denselben Behandlungsprozess wie das zu behandelnde Fahrzeuginnenausstattungsteil. Beispielsweise wird es, bei einer EinKomponenten-Klebeverbindung, die aushärten muss, an dem auszuhärtenden Teil fixiert und mit diesem gemeinsam beispielsweise einer Temperaturbehandlung unterzogen.

Die Anzeige einer hinreichenden Behandlung erfolgt vorzugsweise durch eine optische, insbesondere farbliche Anzeige, insbesondere durch eine farbliche Veränderung des Indikators. Diese farbliche Veränderung tritt beispielsweise bei Überschreiten einer bestimmten Temperatur für eine bestimmte Dauer auf.

Vorzugsweise weist das erfindungsgemäße Fahrzeuginnenausstattungsteil einen zusätzlichen Indikator auf, mit dem sichergestellt wird, dass bei der jeweiligen Behandlung ein gewisser Maximalwert, nicht überschritten wird. Die zu dem ersten Indikator gemachten Ausführungen gelten für den zweiten Indikator gleichermaßen.

Das Fahrzeuginnenausstattungsteil weist vorzugsweise auch dann mehrere Indikatoren auf, wenn verschiedene Bereiche des Fahrzeuginnenausstattungsteils beispielsweise auf eine unterschiedliche Temperatur gebracht werden müssen. Dies kann beispielsweise bei der Wärmebehandlung von Metallteilen der Fall sein, um unterschiedliche Materialeigenschaften in dem Fahrzeuginnenausstattungsteil zu realisieren.

Mehrere Indikatoren können einstückig oder als mehrere Teile zur Verfügung gestellt werden.

Die Anzeige des Indikators kann zu einer Rückweisung des jeweiligen Fahrzeuginnenausstattungsteils führen, wenn beispielsweise ein gewisser Prozessparameter überschritten worden ist, durch den eine irreversible Schädigung des Fahrzeuginnenausstattungsteil erfolgt ist. Ergibt sich durch den Indikator jedoch, dass eine gewisse Minimalbehandlungsintensität nicht erreicht oder nicht über einen genügend langen Zeitraum gehalten worden ist, so kann das jeweilige Fahrzeuginnenausstattungsteil in den Behandlungsprozess rezykliert und erneut behandelt werden.

Ein weiterer Gegenstand der vorliegenden Erfindung ist ein Verfahren zur Herstellung eines Fahrzeuginnenausstattungsteils, das einer Wärmebehandlung unterzogen wird, bei dem vor der Wärmebehandlung an dem Fahrzeuginnenausstattungsteil mindestens ein Indikator angeordnet wird.

Die zu dem erfindungsgemäßen Fahrzeuginnenausstattungsteil gemachten Ausführungen gelten für das erfindungsgemäße Verfahren gleichermaßen und umgekehrt.

Dieser Gegenstand der vorliegenden Erfindung betrifft ein Verfahren zur Herstellung eines Fahrzeuginnenausstattungsteils. Dieses Fahrzeuginnenausstattungsteil wird einer Wärmebehandlung unterzogen, um beispielsweise einen Kleber zu härten und/oder um bestimmte Materialeigenschaften zu erzielen. Die Wärmebehandlung kann durch Strahlung, Wärmeleitung und/oder Konvektion erfolgen. Wärmebehandlung im Sinne der Erfindung kann auch eine Kühlung des Fahrzeuginnenausstattungsteils beinhalten. Vor dieser Wärmebehandlung wird nun an dem Fahrzeuginnenausstattungsteil mindestens ein Indikator angeordnet. Dieser Indikator zeigt Informationen über mindestens einen Parameter der Wärmebehandlung, vorzugsweise irreversibel, an. Beispielsweise kann anhand des Indikators abgelesen werden bis zu welcher Temperatur das Fahrzeuginnenausstattungsteil erwärmt wurde und/oder wie lange das Fahrzeuginnenausstattungsteil einer gewissen Temperatur ausgesetzt war. Alternativ oder zusätzlich kann die übertragene Wärmemenge angezeigt werden.

Vorzugsweise wird der Indikator nach der Wärmebehandlung analysiert und basierend auf dieser Analyse wird das Fahrzeuginnenausstattungsteils freigegeben, erneut behandelt oder verworfen. Das Ergebnis der Analyse kann in einem Datenspeicher hinterlegt und später als Qualitätsnachweis verwendet werden.

Vorzugsweise erfolgt die Analyse des Indikators durch ein Kameramittel und eine Bildauswertung. Dies ist insbesondere dann möglich, wenn die gewünschte Information durch einen Farbumschlag angezeigt wird. Basierend auf dieser Analyse, erfolgen die nachfolgenden Herstellungsschritte vorzugsweise vollautomatisch. Beispielsweise wird das Fahrzeugteil automatisch zum nächsten Herstellungsschritt transportiert oder verworfen. Weiterhin bevorzugt kann die Wärmebehandlung anhand des Indikators geregelt werden. Beispielsweise kann aufgrund der Information, die der Indikator anzeigt, die Temperatur in dem Behandlungsschritt erhöht/abgesenkt und/oder die Verweilzeit des Bauteils in der Wärmebehandlung erhöht/abgesenkt werden.

## Patentansprüche

1. Fahrzeuginnenausstattungsteil aufweisend mindestens ein Indikationsmittel, das Informationen über einen Herstellungsschritt speichert und/oder anzeigt, wobei der Indikator eine Folie ist, die derart konfiguriert ist, dass die Anzeige einer hinreichenden Behandlung durch eine farbliche Veränderung der Folie erfolgt.

2. Fahrzeuginnenausstattungsteil nach Anspruch 1, **dadurch gekennzeichnet, dass** der Indikator einen Farbstoff aufweist.

3. Fahrzeuginnenausstattungsteil nach einem der voranstehenden Ansprüche, **dadurch gekennzeichnet, dass** der Indikator stoffschlüssig an ihm vorgesehen ist.

4. Fahrzeuginnenausstattungsteil nach einem der voranstehenden Ansprüche **dadurch gekennzeichnet, dass** es mehrere Teile aufweist, die durch Kleben miteinander verbunden sind.

5. Verfahren zur Herstellung eines Fahrzeuginnenausstattungsteils, das einer Wärmebehandlung unterzogen wird, bei dem vor der Wärmebehandlung an dem Fahrzeuginnenausstattungsteil mindestens ein Indikator angeordnet wird, wobei der Indikator eine Folie ist und nach der Wärmebehandlung analysiert und basierend auf dieser Analyse das Fahrzeuginnenausstattungsteil freigegeben, erneut behandelt oder verworfen wird, wobei die Anzeige einer hinreichenden Behandlung durch eine farbliche Veränderung des Indikators erfolgt.

6. Verfahren nach Anspruch 5, **dadurch gekennzeichnet, dass** die Analyse durch ein Kameramittel und eine Bildauswertung erfolgt.

7. Verfahren nach einem der Ansprüche 5 oder 6, **dadurch gekennzeichnet, dass** die Wärmebehandlung anhand des Indikators geregelt wird.

## Claims

1. Vehicle interior equipment component having at least one indication means which stores and/or displays information about a manufacturing step, wherein the indication means is a film which is configured in such a way that the indication of sufficient treatment is carried out by means of a change in colour of the film.

2. Vehicle interior equipment component according to Claim 1, **characterized in that** the indication means has a colouring agent.

3. Vehicle interior equipment component according to either of the preceding claims, **characterized in that** the indication means is provided thereon in a materially joined fashion.

4. Vehicle interior equipment component according to one of the preceding claims, **characterized in that** it has a plurality of components which are connected to one another by bonding.

5. Method of manufacturing a vehicle interior equipment component which is subjected to heat treatment, in which method, before the heat treatment, at least one indication means is arranged on the vehicle equipment component, wherein the indication means is a film and is analysed after the heat treatment and on the basis of this analysis the vehicle interior equipment component is released, treated again or rejected, wherein the indication of sufficient treatment is provided by a change in colour of the indication means.

6. Method according to Claim 5, **characterized in that** the analysis is carried out by a camera means and image evaluation.

7. Method according to either of Claims 5 and 6, **characterized in that** the heat treatment is regulated with reference to the indication means.

## Revendications

1. Pièce d'équipement de l'espace intérieur d'un véhicule comportant au moins un moyen d'indication mémorisant et/ou affichant des informations sur une étape de fabrication, l'indicateur étant un film configuré de telle sorte que l'affichage d'un traitement suffisant se produit par une variation de couleur du film.

2. Pièce d'équipement de l'espace intérieur d'un véhicule selon la revendication 1, **caractérisée en ce que** l'indicateur comporte un colorant.

3. Pièce d'équipement de l'espace intérieur d'un véhicule selon l'une quelconque des revendications précédentes, **caractérisée en ce que** l'indicateur est prévu sur elle par complémentarité de matières.

4. Pièce d'équipement de l'espace intérieur d'un véhicule selon l'une quelconque des revendications précédentes, **caractérisée en ce qu'**elle comporte plusieurs pièces reliées entre elles par collage.

5. Procédé de fabrication d'une pièce d'équipement de l'espace intérieur d'un véhicule soumise à un traitement thermique, où au moins un indicateur est disposé avant le traitement thermique effectué sur la pièce d'équipement de l'espace intérieur d'un véhicule, l'indicateur étant un film et étant analysé après le traitement thermique et la pièce d'équipement de l'espace intérieur d'un véhicule étant libérée, retraitée ou mise au rebut sur la base de cette analyse, l'affichage d'un traitement suffisant se faisant par le biais d'un changement de couleur de l'indicateur.

6. Procédé selon la revendication 5, **caractérisé en ce que** l'analyse est réalisée par le biais d'un moyen de caméra et d'une analyse d'image.

7. Procédé selon l'une quelconque des revendications 5 ou 6, **caractérisé en ce que** le traitement thermique est réglé à l'aide de l'indicateur.
